# EUROPÄISCHE PATENTSCHRIFT

(11) **EP 1 183 487 B1**
(45) Veröffentlichungstag und Bekanntmachung des Hinweises auf die Patenterteilung: **17.01.2007**
(21) Anmeldenummer: 00940194.4
(22) Anmeldetag: 18.05.2000
(51) Int. Cl.: F24J 2/06

(54) **STRAHLUNGSLEITEINRICHTUNG**
RADIATION GUIDANCE SYSTEM
UNITE DE GUIDAGE DE RAYONNEMENT

(30) Priorität: 18.05.1999 DE 19922649
(43) Veröffentlichungstag der Anmeldung: 06.03.2002
(73) Patentinhaber: Powerpulse Holding AG, 6304 Zug (CH)
(72) Erfinder: KLEINWÄCHTER, Jürgen, D-79541 Lörrach (DE)
(74) Vertreter: Castell, Klaus
(86) Internationale Anmeldenummer: PCT/DE2000/001562
(87) Internationale Veröffentlichungsnummer: WO 2000/070275

(56) Entgegenhaltungen:
- EP-A- 0 875 724
- DE-A- 19 735 281
- US-A- 4 483 311
- CARIOU J M ET AL: "Theoretical limits of optical fibre solar furnaces" SOLAR ENERGY, 1985, USA, Bd. 34, Nr. 4-5, Seiten 329-339, XP002146807 ISSN: 0038-092X

## Beschreibung

Die Erfindung betrifft eine Strahlungsleiteinrichtung, insbesondere zur Konzentration von Sonnenlicht, mit mehreren Leitsträngen, einer Strahlungseingangsseite, an der die Leitstränge eng aneinander anliegen, und einer Strahlungsausgangsseite.

Gattungsgemäße Strahlungsleiteinrichtungen sind beispielsweise aus der GB 2 253 070 A, der US-A-4,483,311 und der US 4,389,085 bekannt. Hierbei werden mehrere Leitstränge zu einer Strahlungsleiteinrichtung zusammengefasst und diese Strahlungsleiteinrichtung hat eine Eingangsseite, an der die Strahlung in die Strahlungsleiteinrichtung eingekoppelt wird und eine Strahlungsausgangsseite, an der die Strahlung aus der Strahlungsleiteinrichtung ausgekoppelt wird. Bei derartigen Lichtleitern wird das Prinzip der Reflektion innerhalb der Leitstränge dazu genutzt, Strahlungsenergie von einem Ort zu einem anderen zu leiten. Diese Vorrichtungen sind jedoch nicht dazu geeignet, Lichtenergie zu konzentrieren, sondern sie werden dazu benutzt, konzentrierte oder unkonzentrierte Lichtstrahlung weiterzuleiten.

Aus der US 4,798,444 ist es bekannt, mehrere Lichtleiter so anzuordnen, dass je nach Sonnenstand in einen oder mehrere der Leiter Lichtenergie eingekoppelt wird. Die in die Lichtleiter eingekoppelte

Lichtenergie wird im Lichtleiter zu einem zentralen Lichtleiter mit größerem Durchmesser geleitet und von dort weitergeleitet. Dadurch wird zwar eine Sammlung der Energie in einem zentralen Leiter erreicht, zur Konzentration eignet sich die Vorrichtung jedoch nicht.

Die US 4,662,714 zeigt eine Strahlungsleiteinrichtung, bei der mehrere Faserbündel zu einem gemeinsamen Ziel zusammengeführt werden. Diese Strahlungsleiteinrichtung führt zu einer gewissen Konzentration der über die Strahlungsbündel zusammengeführten Strahlung. Die Querschnittsflächen der Lichtfaseraustritte liegen jedoch in einer Ebene und sind daher nicht dazu geeignet, nach Austritt des Lichtstrahls aus dem Leitstrang eine weitere Konzentration zu erzielen.

Die US 4,970,054 beschreibt Leitstränge, die auf der Strahlungsausgangsseite auf ein Zentrum ausgerichtet sind. Bei dieser Vorrichtung werden der Sonne nachgeführte Lichtleiter dazu verwendet, Sonnenlicht einzusammeln. Anschließend wird das Licht in drei verschiedene Farben zerlegt und das verschiedenfarbige Licht trifft sich durch die Ausrichtung der Enden der Leitstränge in einem Punkt. Als Konzentrator ist diese Einrichtung jedoch insbesondere wegen der Nachführung entsprechend der Lichteinfallsrichtung jedoch weniger geeignet.

Ausgehend von diesem Stand der Technik liegt der Erfindung die Aufgabe zugrunde, eine Strahlungsleiteinrichtung zu entwickeln, die dazu geeignet ist, Strahlung auf einfache Art und Weise aufzunehmen, zu leiten und zu konzentrieren.

Diese Aufgabe wird mit einer Strahlungsleiteinrichtung mit den Merkmalen des Patentanspruchs 1 gelöst.

Durch die numerische Apertur bei einander liegenden Leitfasern wird der "Blickwinkel" sehr groß und gleichzeitig ist auf der Austrittsseite eine Konzentration möglich.

Der Erfindung liegt die Erkenntnis zugrunde, dass die Leitstränge nicht wie im Stand der Technik immer parallel zueinander angeordnet werden müssen, sondern auch derart geformt werden können, dass die Enden auf ein gemeinsames Ziel gerichtet sind. Das Ziel kann hierbei beispielsweise eine Ebene, ein Punkt oder eine Kugel sein, worauf die Ausgänge der Leitstränge gerichtet sind. Während beim Ausrichten der Strahlungsausgänge der Leitstränge auf eine Kugel die Konzentration auf der Kugeloberfläche oder in der Kugel stattfindet, wird die Konzentration bei dem Ausrichten der Leitstränge auf einen Punkt, eine Linie oder eine kleinere Fläche vor allem durch Überlagerung oder Superposition erreicht. Vorteilhaft ist es daher, wenn die Leitstränge auf der Strahlungsausgangsseite so auf ein Zentrum ausgerichtet sind, dass sich die Strahlung im Zentrum überlagert. Hierdurch ist eine besonders effektive Konzentration der Strahlung zu erzielen.

Insbesondere für stationäre auf die Sonne ausgerichtete Strahlungsleiteinrichtungen wird vorgeschlagen, dass die Strahlungseingangsseite einen Akzeptanzkonus von über 120°, vorzugsweise über 170" aufweist. Dies wird beispielsweise durch Leitstränge aus Polyacryl oder hochlichtbrechendem Glas erreicht.

Da auf dem Markt vor allem Lichtleitstränge mit einem runden Querschnitt preisgünstig angeboten werden, wird vorgeschlagen, dass die Enden der Leitstränge einen runden Querschnitt aufweisen und auf der Strahlungseingangsseite einen von einem vieleckigen auf einen runden Querschnitt übergehenden vorzugsweise verspiegelten Trichter. Derartige Trichter ermöglichen es, das Licht einzufangen und durch Reflektion an der Trichterwandung die Strahlung zum runden Querschnitt hin zu leiten. Dadurch kann der Wirkungsgradverlust, der durch die Hohlräume zwischen den eng aneinander liegenden runden Leitsträngen entsteht zumindest minimiert werden. Als Ausführungsbeispiele bieten sich vor allem quadratische, rechteckige, sechs- oder achteckige Trichterquerschnitte an.

Um den Verlust beim Einkoppeln der Strahlung in die Leitstränge klein zu halten, wird vorgeschlagen, dass die Strahlungseingangsseite entspiegelt ist oder eine optische Struktur aufweist. Dadurch wird der Reflektionsanteil an der Einkopplungsfläche minimiert.

Die Leitstränge können aus einem Vollmaterial wie Polyacryl oder Glas bestehen. Vorteilhaft ist es jedoch, wenn die Leitstränge einen Raum begrenzen. Dieser Raum kann mit einem flüssigen, viskosen, aushärtenden oder plastischen Material gefüllt werden, um die Reflektion auf der Innenseite der Leitstränge für die Strahlungsleitung zu nutzen. Hierzu kann beispielsweise der Lichtstrang aus einem Fluorpolymer hergestellt werden und mit einem hochtransparenten Öl gefüllt sein. Der Hohlraum im Leitstrang ermöglicht jedoch die Füllung mit unterschiedlichsten Materialien, die je nach Anwendungsfall besondere Vorzüge bieten.

Eine vorteilhafte Ausgestaltung sieht vor, dass die Leitstränge in einem vorzugsweise stationär aufgestellten Kasten angeordnet sind. Dies ermöglicht einen kompakten Aufbau der Strahlungsleiteinrichtung und die Leitstränge können im Kasten in einer bestimmten Form gehalten werden, die eine Ausrichtung der Leitstränge auf ein Ziel erlaubt.

Unter dem Begriff "Leitstränge" wird im Rahmen der vorliegenden Anmeldung jede räumliche Anordnung verstanden, die es erlaubt, Licht durch Reflektion an Flächen zu leiten. Diese Leitstränge können somit nicht nur runde oder quadratische Querschnitte aufweisen, sondern auch ringförmige Querschnitte, die es erlauben, mehrere Leitstränge konzentrisch zueinander anzuordnen.

Eine vorteilhafte Ausführungsform sieht vor, dass der Kasten mit einer Flüssigkeit gefüllt ist. Dies ermöglicht es, in der Flüssigkeit im Kasten zur Leitung der Strahlung Wände anzuordnen, die beispielsweise aus Fluorpolymer bestehen. Zumindest die Oberseite des Kastens ist aus transparentem Material und im Kasten ist vorzugsweise ein dichtes Medium mit hoher Brechzahl, wie beispielsweise Öl, vorgesehen. Der Kasten bildet somit einen Strahlungsleiter und -Konzentrator.

Die Anordnung der Enden der Leitstränge auf einer sphärischen über dem Zentrum aufgespannten Fläche hat den Vorteil, dass jedes Ende eines Leitstranges etwa die gleiche Entfernung zum Zentrum hat. Im Hinblick auf einen kompakten Aufbau der Strahlungsleiteinrichtung ist es jedoch von Vorteil, wenn die Enden der Leitstränge auf der Strahlungsausgangsseite im wesentlichen in einer Ebene angeordnet sind. Dies ermöglicht es, beispielsweise die Enden innerhalb des oben beschriebenen Kastens anzuordnen, um einen möglichst kompakten Aufbau zu erzielen.

Insbesondere bei unterschiedlichen Abständen zwischen den Enden der Leitstränge und dem Zentrum wird vorgeschlagen, dass die Enden der Leitstränge auf der Strahlungsausgangsseite jeweils eine Optik, insbesondere eine Fresnell-Linse aufweisen.

Am Lichtleiterende tritt das Licht in einem typischen Divergenzkegel aus. Die Überlagerung solcher divergenter Strahlenbündel führt zwar zu einer Konzentration des Lichtes in der Überlagerungsebene, jedoch müssen sehr viele Lichtleiter eingesetzt werden, um einen praktisch nutzbaren Verstärkungsfaktor zu erreichen. Deshalb kann eine wesentliche Verbesserung erreicht werden, wenn die Austrittsenden der Leitstränge mit Endoptiken versehen sind, die den Divergenzwinkel des austretenden Strahlungsbündels entweder verkleinern, parallelisieren oder das austretende Licht sogar nachkonzentrieren. Als Endoptiken kommen spezielle dem austretenden Strahlungskonus angepasste Linsensysteme, insbesondere Fresnell-Linsen in Frage.

Durch Überlagerung dieser optisch nachbehandelten austretenden Strahlungshündel kann die beschriebene Superposition und somit Konzentration der Strahlung effektiver und schon mit einer geringen Anzahl an Leitsträngen realisiert werden.

Da beispielsweise in Abhängigkeit des Strahlungseinfalls häufig eine unterschiedliche Konzentration gewünscht wird, wird vorgeschlagen, dass die Optik auswechselbar oder einstellbar ist. Je nach Einsatzgebiet können somit verschiedene Optiken verwendet werden oder es können Optiken verwendet werden, die es erlauben, den Fokus individuell einzustellen und gegebenenfalls auch beim Betrieb der Strahlungsleiteinrichtung zu variieren.

Das Hauptanwendungsgebiet der Strahlungsleiteinrichtung liegt in der Konzentration von Sonnenstrahlung. Die Einrichtung kann jedoch auch als Empfänger für elektromagnetische Strahlung oder Konzentrator bzw. Verstärker für unterschiedlichste Strahlenarten eingesetzt werden.

Letztlich kann die Strahlunusieiteinrichtung auch im umgekehrten Sinne verwendet werden, in dem auf ihrer Strahtungsausgangsseite Strahlung, wie beispielsweise Licht, eingekoppelt wird, um an der Strahlungseingangsseite die Strahtungsieiteinrichtung zu verlassen. Dies ermöglicht es beispielsweise das Licht einer Glühbirne auf eine Fläche zu verteilen, um diese Fläche gleichmäßig auszuleuchten.

Im folgenden wird die Erfindung an zwei Ausführungsbeispielen erläutert und näher beschrieben. Es zeigt
- Figur 1: schematisch eine Strahlungsleiteinrichtung, bei der die Enden der Leitstränge etwa im gleichen Abstand zu einem Zentrum angeordnet sind,
- Figur 2: schematisch den Strahlungsverlauf an einem Leitstrang,
- Figur 3: eine Draufsicht auf einen verspiegelten Trichter und
- Figur 4: eine weitere Ausführungsform einer Strahtungsteiteinrichtung, bei der die Leitstränge in einem Kasten angeordnet sind.

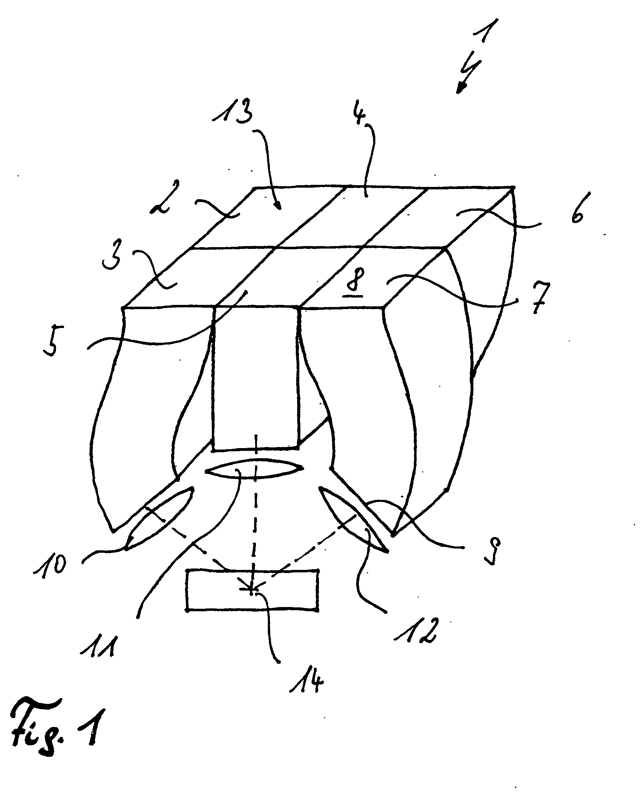

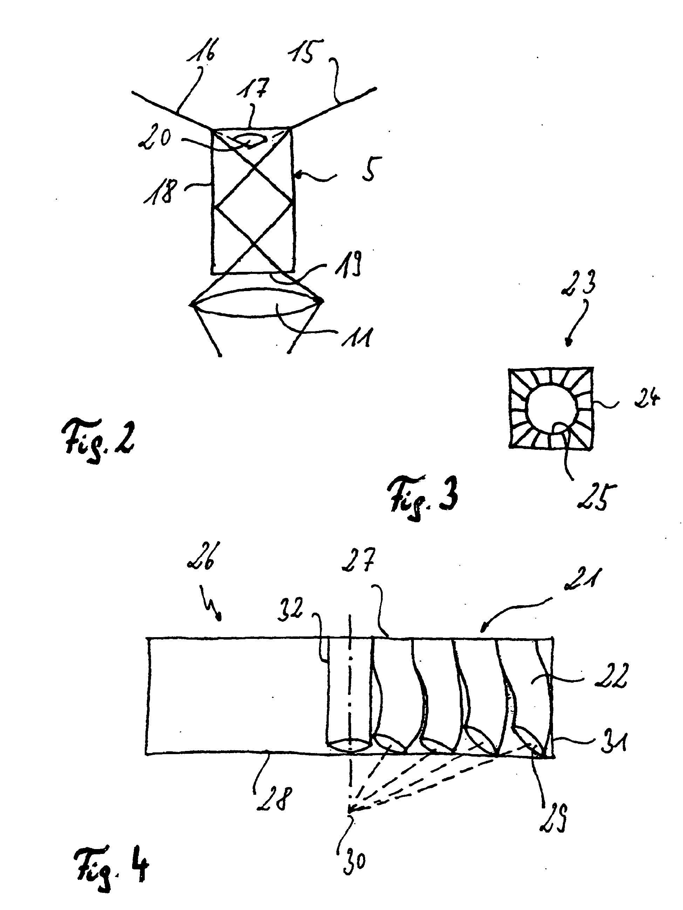

Die in Figur 1 gezeigte Strahlungsleiteinrichtung 1 besteht aus mehreren Leitsträngen 2 bis 7, die jeweils eine Strahlungseingangsseite 8 und eine Strahlungsausgangsseite 9 aufweisen. Im Bereich der Strahlungsausgangsseite 9 ist jedem Leitstrang 2 bis 7 jeweils eine Linse als Optik 10, 11, 12 zu geordnet. Zu Erhöhung der Übersichtlichkeit der Zeichnung wurden von neun Leitsträngen nur sechs dargestellt und auch nur drei Linsen abgebildet.

An der in der Figur 1 oben dargestellten Strahlungseingangsseite 13 der Strahlungsleiteinrichtung 1 sind die im Querschnitt quadratisch ausgebildeten Leitstränge 2 bis 7 eng aneinander anliegend angeordnet, so dass eine ebene Lichteinfallsfläche entsteht.

Mit Ausnahme des mittleren Leitstrangs 5 sind die Leitstränge 2, 3, 4, 6 und 7 derart gebogen, dass ihre Strahlungsausgangsseiten 9 auf ein Zentrum 14 ausgerichtet sind. Dieses Zentrum 14 wird auch als Target bezeichnet und ist ein Ort, an dem sich die durch die Leitstränge 2 bis 7 geleitete Strahlung trifft und eine besonders hohe Strahlungskonzentration bewirkt.

Die Figur 2 zeigt an einem Leitstrang 5 schematisch den Verlauf der Randstrahlen 15 und 16, die auf die Oberseite 17 des Leitstrangs 5 auftreffen. Die beiden Randstrahlen 15 und 16 bilden den Akzeptanzkonus, der durch den Winkel 20 gekennzeichnet ist. Beim Eintritt in den Leitstrang werden die Strahlen 15 und 16 zum dichteren Medium im Leitstrang abgelenkt und anschließend am äußeren Rand 18 des Leitstrangs 5 reflektiert. Je nach Länge des Leitstrangs 5 wird der Strahl mehr oder weniger oft innerhalb des Leitstrangs reflektiert. Anschließend tritt der Strahl an der Austrittsseite 19 aus dem Leitstrang 15 aus. An der Austrittsseite 19 treten die Lichtstrahlen in einem Divergenzwinkel aus dem Leitstrang aus, der im wesentlichen dem Akzeptanzwinkel 20 entspricht.

Um die Strahlung an dieser Stelle besser auf das Target zu konzentrieren, ist die Linse 11 nachgeschaltet, die eine Fokussierung der Strahlung auf das Target 14 bewirkt.

Sofern die Leitstränge wie bei dem in Figur 3 dargestellten Ausführungsbeispiel einen kreisförmigen Querschnitt aufweisen, ist auf der Strahtungseingangsseite 21 jedem Leitstrang 22 ein verspiegelter Trichter 23 vorgeschaltet. Diese flachen Trichter 23 ermöglichen es, den Raum zwischen den runden Leitsträngen 22 abzudecken und die dort einfallende Strahlung zu den Leitsträngen hin abzulenken. Hierfür ist der Trichter an seinem oberen Ende 24 quadratisch und an seinem unteren Ende 25 rund ausgebildet. Die dazwischen liegende Trichterwand konzentriert die einfallende Strahlung auf den darunter angeordneten Leitstrang.

Bei der in Figur 4 dargestellten Strahlungsleiteinrrichtung 26 sind zur Erhöhung der Übersichtlichkeit nur auf einer Seite die Leitstränge 22 eingezeichnet. Diese Leitstränge 22 sind zwischen zwei parallelen durchsichtigen Flächen 27 und 28 eingesetzt und derart gebogen, dass ihre Strahtungsausgangsflächen 29 auf ein gemeinsames Ziel 30 ausgerichtet sind. Im Bereich dieser Strdhlungsaustrittsflächen können noch Optiken (nicht gezeigt) angeordnet werden, die die Konzentration der Strahlung auf das Target 30 verbessern.

Zwischen den durchsichtigen Scheiben 27 und 28 ist ein Öl als optisches, dichtes Medium eingefüllt und die Leitstränge werden nur von Fluorpolymerwänden begrenzt. Die Fluorpolymerwände können als Vielzahl kleiner Schläuche im transparenten Kasten 31 angeordnet werden, wobei ihre Strahlungseintrittsflächen im wesentlichen auf der Ebene der Scheibe 27 liegen und die Lichtaustrittsflächen 29 auf das Target 30 ausgerichtet sind. Die Fluorpolymerwände der Leitstränge können jedoch auch als Schläuche verschiedenen Durchmessers konzentrisch um einen mittleren Schlauch 32 angeordnet sein.

## Patentansprüche

1. Strahlungsleiteinrlchtung, insbesondere zur Konzentration von Sonnenlicht, mit mehreren Leitsträngen (2 bis 7; 22), einer Strahlungseingangsseite (13), an der die Leitstränge (2 bis 7; 22) eng aneinander anliegen und einer Strahlungsausgangsseite (28), wobei die Leitstränge (2 bis 7; 22) auf der Strahlungsausgangsseite (28) auf ein Zentrum (30) ausgerichtet sind, ***dadurch gekennzeichnet, dass*** der Winkel der Querschnittsfläche des Leitstrangaustritts eines Leitstranges gegenüber dessen Eintrittsfläche von einem zentralen Leitstrang mit wachsendem Abstand zu diesem zunimmt.

2. Strahlungsleiteinnchtung nach Anspruch 1, **dadurch gekennzeichnet, dass** die Enden der Leitstränge (2 bis 7; 22) auf der Strahlungseingangsseite (13) im wesentlichen in einer Ebene angeordnet sind.

3. Strahlungsleiteinrichtung nach einem der vorhergehenden Ansprüche, **dadurch gekennzeichnet, dass** die Leitstränge (2 bis 7; 22) auf der Strahlungseingangsseite (13) stationär angeordnet sind.

4. Strahlungsleiteinrichtung nach einem der vorhergehenden Ansprüche, **dadurch gekennzeichnet, dass** die Strahlungseingangsseite (13) einen Akzeptanzkonus von über 120o, vorzugsweise über 170o, aufweist.

5. Strablungsleiteinrichtung nach einem der vorhergehenden Ansprüche, **dadurch gekennzeichnet, dass** die Enden der Leitstränge (2 bis 7; 22) einen runden Querschnitt aufweisen und auf der Strahlungseingangsseite einen von einem vieleckigen auf einen runden Querschnitt übergehenden vorzugsweise verspiegelten Trichter (23).

6. Strahlungsleiteinrichtung nach einem der vorhergehenden Ansprüche, **dadurch gekennzeichnet, dass** die Strahlungseingangsseite (13) entspiegelt ist oder eine optische Struktur aufweist.

7. Strahlungsleiteinrichtung nach einem der vorhergehenden Ansprüche, **dadurch gekennzeichnet, dass** die Leitstränge (2 bis 7; 22) einen Raum begrenzen.

8. Strahlungsleiteinrichtung nach einem der vorhergehenden Ansprüche, **dadurch gekennzeichnet, dass** die Leitstränge (2 bis 7; 22) in einem, vorzugsweise stationär aufgestellten, Kasten (31) angeordnet sind.

9. Strahlungsleiteinrichtung nach Anspruch 8, **dadurch gekennzeichnet, dass** der Kasten (31) mit einer Flüssigkeit gefüllt ist.

10. Strahlungsleiteinrichtung nach einem der vorhergehenden Ansprüche, **dadurch gekennzeichnet, dass** die Enden (9) der Leitstränge (2 bis 7; 22) auf der Strahlungsausgangsseite im wesentlichen in einer Ebene angeordnet sind.

11. Strahlungsleiteinrichtung nach einem der vorhergehenden Ansprüche, **dadurch gekennzeichnet, dass** die Enden der Leitstränge (2 bis 7; 22) auf der Strahlungsausgangsseite (9, 29) jeweils eine Optik (12), insbesondere eine Fresnell-Linse aufweisen.

12. Strahlungsleiteinrichtung nach Anspruch 11, **dadurch gekennzeichnet, dass** die Optik (12) auswechselbar oder einstellbar ist.

## Claims

1. A radiation guide device, in particular for the concentration of sunlight, with a plurality of guide paths (2 to 7; 22), a radiation entry face (13), on which the guide paths (2 to 7; 22) lie close together and a radiation exit face (28), wherein
the guide paths (2 to 7; 22) on the radiation exit face (28) are directed towards a centre (30),
**characterised in that** the angle of the cross-sectional exit face of a guide path with respect to the entry face of a central guide path increases with increasing distance from the latter.

2. The radiation guide device according to Claim 1,
**characterised in that** the ends of the guide paths (2 to 7; 22) on the radiation entry face (13) are essentially arranged in one plane.

3. The radiation guide device according to one of the previous claims,
**characterised in that** the guide paths (2 to 7; 22) on the radiation entry face (13) are arranged so as to be stationary.

4. The radiation guide device according to one of the previous claims,
**characterised in that** the radiation entry face (13) has an acceptance cone of over 120 degrees, preferably over 170 degrees.

5. The radiation guide device according to one of the previous claims,
**characterised in that** the ends of the guide paths (2 to 7; 22) have a round cross-section and on the radiation entry face a funnel (23), preferably with reflecting surfaces, which transitions from a many-sided to a round cross-section.

6. The radiation guide device according to one of the previous claims,
**characterised in that** the radiation entry face (13) is non-reflecting, or has an optical structure.

7. The radiation guide device according to one of the previous claims,
**characterised in that** the guide paths (2 to 7; 22) delimit a space.

8. The radiation guide device according to one of the previous claims,
**characterised in that** the guide paths (2 to 7; 22) are arranged in a box (31), which is preferably positioned so as to be stationary.

9. The radiation guide device according to Claim 8,
**characterised in that** the box (31) is filled with a fluid.

10. The radiation guide device according to one of the previous claims,
**characterised in that** the ends (9) of the guide paths (2 to 7; 22) on the radiation exit face (13) are essentially arranged in one plane.

11. The radiation guide device according to one of the previous claims,
**characterised in that** each of the ends (9, 29) of the guide paths (2 to 7; 22) on the radiation exit face has an optical system (12), in particular a Fresnel lens.

12. The radiation guide device according to Claim 11,
**characterised in that** the optical system (12) can be exchanged or adjusted.

## Revendications

1. Dispositif de guidage de rayonnement, en particulier pour la concentration de la lumière solaire, comportant plusieurs segments de guidage (2 à 7 ; 22), un côté de rayonnement entrant (13), où les segments de guidage (2 à 7 ; 22) sont disposés très proches les uns des autres, et un côté de rayonnement sortant (28), dans lequel les segments de guidage (2 à 7 ; 22) du côté du rayonnement sortant (28) sont dirigés vers un centre (30), ***caractérisé en* ce *que*** l'angle de la surface de section transversale de sortie d'un segment de guidage par rapport à sa surface entrante augmente à partir d'un segment de guidage central en fonction de la distance par rapport à celui-ci.

2. Dispositif de guidage de rayonnement selon la revendication 1, **caractérisé en ce que** les extrémités des segments de guidage (2 à 7 ; 22) sont disposées pratiquement dans un même plan du côté du rayonnement entrant (13).

3. Dispositif de guidage de rayonnement selon l'une quelconque des revendications précédentes, **caractérisé en ce que** les segments de guidage (2 bis 7 ; 22) sont disposés de façon fixe du côté du rayonnement entrant (13).

4. Dispositif de guidage de rayonnement selon l'une quelconque des revendications précédentes, **caractérisé en ce que** le côté du rayonnement entrant (13) présente un cône de réception de plus de 120° et préférablement de plus de 170°.

5. Dispositif de guidage de rayonnement selon l'une quelconque des revendications précédentes, **caractérisé en ce que** les extrémités des segments de guidage (2 à 7 ; 22) présentent une section ronde et, du côté du rayonnement entrant, un entonnoir (23) de préférence réfléchissant, dont la section transversale passe d'une forme polygonale à une forme ronde.

6. Dispositif de guidage de rayonnement selon l'une quelconque des revendications précédentes, **caractérisé en ce que** le côté du rayonnement entrant (13) est non réfléchissant ou présente une structure optique.

7. Dispositif de guidage de rayonnement selon l'une quelconque des revendications précédentes, **caractérisé en ce que** les segments de guidage (2 à 7 ; 22) délimitent un espace.

8. Dispositif de guidage de rayonnement selon l'une quelconque des revendications précédentes, **caractérisé en ce que** les segments de guidage (2 à 7 ; 22) sont disposés dans un coffret (31), agencé de préférence de façon fixe.

9. Dispositif de guidage de rayonnement selon la revendication 8, **caractérisé en ce que** le coffret (31) est rempli d'un fluide.

10. Dispositif de guidage de rayonnement selon l'une quelconque des revendications précédentes, **caractérisé en ce que** les extrémités (9) des segments de guidage (2 à 7 ; 22) sont disposées pratiquement dans un même plan du côté du rayonnement sortant.

11. Dispositif de guidage de rayonnement selon l'une quelconque des revendications précédentes, **caractérisé en ce que** les extrémités des segments de guidage (2 à 7 ; 22) comportent chacune, du côté du rayonnement sortant (9, 29), une optique (12) et en particulier une lentille de Fresnel.

12. Dispositif de guidage de rayonnement selon la revendication 11, **caractérisé en ce** l'optique (12) est interchangeable ou réglable.
